# EUROPÄISCHE PATENTSCHRIFT

(11) **EP 3 955 512 B1**
(45) Veröffentlichungstag und Bekanntmachung des Hinweises auf die Patenterteilung: **07.06.2023**
(21) Anmeldenummer: 20191230.0
(22) Anmeldetag: 14.08.2020
(51) Int. Cl.: H04L 9/08, H04L 9/06

(54) **ÜBERTRAGUNG QUANTENSICHERER SCHLÜSSEL ÜBER INTERMEDIÄREN NETZWERKKNOTEN**
TRANSMISSION OF QUANTUM SECURE KEYS OVER INTERMEDIATE NETWORK NODES
TRANSFERT DE CLÉ À SÉCURITÉ QUANTIQUE SUR LES N UDS DE RÉSEAU INTERMÉDIAIRES

(43) Veröffentlichungstag der Anmeldung: 16.02.2022
(73) Patentinhaber: Deutsche Telekom AG, 53113 Bonn (DE)
(72) Erfinder: BRAUN, Ralf-Peter, 12305 Berlin (DE); GEITZ, Marc, 58089 Hagen (DE)
(74) Vertreter: Brandt & Nern Patentanwälte

(56) Entgegenhaltungen:
- CA-A1- 3 078 558
- CN-A- 108 270 557
- US-A1- 2004 184 603
- CAO YUAN ET AL: "Cost-efficient quantum key distribution (QKD) over WDM networks", JOURNAL OF OPTICAL COMMUNICATIONS AND NETWORKING, INSTITUTE OF ELECTRICAL AND ELECTRONICS ENGINEERS, US, Bd. 11, Nr. 6, 1. Juni 2019 (2019-06-01), Seiten 285-298, XP011729309, ISSN: 1943-0620, DOI: 10.1364/JOCN.11.000285 [gefunden am 2019-06-10]

## Beschreibung

Die Erfindung betrifft eine Lösung zur Übertragung eines quantensicheren Schlüssels zwischen zwei Netzwerkknoten, welche zwar mit Mitteln zur Erzeugung von quantensicheren Schlüsseln ausgestattet, aber untereinander direkt nicht über einen Quantenkanal verbunden sind. Die Übertragung entsprechender quantensicherer, jeweils in einem der beiden vorgenannten Netzwerkknoten erzeugter kryptographischer Schlüssel, welche diese Netzwerkknoten dann für eine, einen klassischen Übertragungskanal nutzende geschützte Datenübertragung untereinander verwenden können, erfolgt daher mit Hilfe mindestens eines anderen, als intermediärer Knoten fungierenden Netzwerkknotens. Gegenstände der Erfindung sind ein Verfahren und ein zur Durchführung dieses Verfahrens geeigneter intermediärer Netzwerkknoten.

Die vorgestellte Lösung ist durch die Annahme beziehungsweise durch den anerkannten Grundsatz motiviert, dass ein Kommunikationssystem als quantensicher gilt, sofern sich die Vertraulichkeit und die (vorzugsweise, das heißt im Grunde zwingend, zu überprüfende) Authentizität zwischen einem Sender und einem Empfänger übertragener Daten nicht durch Quantencomputer angreifen lässt. Entsprechendes wird nach dem derzeitigen Stand der Technik durch den Aufbau eines QKD-Systems erreicht, bei welchem die sendende und die empfangende Stelle über Mittel zur quantenmechanischen Erzeugung und zum Austausch von ihnen gemeinsam genutzter kryptographischer Schlüssel verfügen, wobei sie dazu typischerweise über einen Quantenkanal und über einen, dem Schlüsselmanagement dienenden, besonders gesicherten klassischen Kanal miteinander verbunden sind.

Im Rahmen der derzeit zur Verfügung stehenden Technik zur Nutzung der QKD-Technologie ist jedoch die Reichweite für einen nach dem QKD-Prinzip, das heißt nach einem Verfahren der Quantum Key Distribution, erfolgenden Quantenschlüssel-Austausch limitiert und auf Richtfunkverbindungen (terrestrisch oder über Satellit) beziehungsweise auf direkte Verbindungen über Glasfaserstrecken ohne optische Inlineverstärker beschränkt. In Bezug auf Letztere, also auf Glasfaserverbindungen, ergibt sich die Beschränkung der Reichweite durch die Dämpfung, welcher die zum Zweck des Schlüsselaustauschs mit geringer Leistung übertragenen Photonen in der Lichtleitfaser (des Quantenkanals) unterliegen. Hierdurch ist ein Schlüsselaustausch nach dem QKD-Prinzip unter Nutzung von Glasfaserverbindungen typischerweise nur über wenige Kilometer, aber jedenfalls nach dem Stand der Technik nicht über Entfernungen möglich, die deutlich größer sind als 100 km, also insbesondere mehrere 100 km oder gar über 1.000 km betragen.

Sofern daher zwei Netzwerkknoten, deren Entfernung voneinander eine unmittelbare Anwendung des QKD-Prinzips nicht ermöglicht, mit quantensicheren, für einen direkten verschlüsselten Datenaustausch zwischen diesen Knoten zu verwendenden Schlüsseln ausgestattet werden sollen, werden diesen Netzwerkknoten entsprechende, in einem der beiden Netzwerkknoten erzeugte Schlüssel über einen oder mehrere zwischen ihnen angeordnete intermediäre Netzwerkknoten zugestellt. Ein Nachteil dazu bisher bekannt gewordener Lösungen ist es jedoch, dass der oder die für den direkten verschlüsselten Datenaustausch zwischen den beiden nicht über einen Quantenkanal miteinander verbundenen Netzwerkknoten vorgesehenen Schlüssel auch in dem oder den zu ihrer Übertragung genutzten intermediären Netzwerkknoten vorliegen.

Dies macht es erforderlich, die betreffenden intermediären Netzwerkknoten als sogenannte Trusted Nodes beziehungsweise in einer speziellen Trusted Zone, also einer hochgesicherten Umgebung, zu betreiben. Solche speziell gesicherten Trusted Nodes oder Sicherheitsumgebungen müssen in besonderer Weise gegen einen illegalen Zutritt gesichert und überwacht werden, um zuverlässig zu verhindern, dass über sie übertragene quantensichere Schlüssel in die Hände potenzieller Angreifer gelangen. Die entsprechenden Einrichtungen sind daher typischerweise mit aufwendigen Überwachungssystemen, Schließmechanismen, Alarmanlagen, und dergleichen mehr ausgestattet und werden häufig zudem durch einen Sicherheitsdienst oder durch mit der Polizei gekoppelte Einbruchsmeldeanlagen geschützt. Jedoch sind entsprechende Sicherungs- und Überwachungsmaßnahmen mit einem beträchtlichen Aufwand und insoweit mit sehr hohen Kosten verbunden.

Ungeachtet dessen ist ein jeweiliger über einen solchen intermediären Netzwercknoten übertragener quantensicherer Schlüssel zumindest dem jeweiligen Provider, das heißt dem Betreiber des entsprechenden intermediären Knotens (und dessen Mitarbeitern), zugänglich, welchem die Nutzer der Infrastruktur, also beispielsweise eine quantensichere Schlüssel zur eigenen Nutzung zwischen Netzwerkknoten an zwei entfernten Standorten übertragende Firma oder Organisation, insoweit vollends vertrauen muss. XP011729309 beschreibt ein QKD über WDM Netzwerke.

Aufgabe der Erfindung ist es, eine Lösung anzugeben, welche die Übertragung eines quantensicheren Schlüssels zwischen zwei mit Mitteln zur Erzeugung quantensicher Schlüssel ausgestatteten, aber selbst nicht über einen Quantenkanal miteinander direkt verbundenen Netzwerkknoten über einen intermediären Netzwerkknoten ermöglicht, ohne dass der übertragene quantensichere Schlüssel innerhalb dieses intermediären Netzwerkknotens offengelegt wird. Hierzu sind ein Verfahren zu beschreiben und ein zu dessen Durchführung geeigneter intermediärer Netzwerkknoten bereitzustellen.

Die Aufgabe wird durch ein Verfahren mit den Merkmalen des Patentanspruchs 1 gelöst. Ein die Aufgabe lösender, zur Durchführung des Verfahrens geeigneter intermediärer Netzwerkknoten wird durch den ersten unabhängigen Sachanspruch charakterisiert. Vorteilhafte Aus- und Weiterbildungen der Erfindung sind durch die jeweiligen Unteransprüche gegeben.

Gemäß den vorstehenden Ausführungen und der Aufgabe geht das vorgeschlagene Verfahren von einer Konstellation aus, bei welcher ein quantensicherer Schlüssel, nämlich ein später als Nutzschlüssel zur gesicherten, insbesondere verschlüsselten Datenübertragung dienender Quantenschlüssel, zwischen zwei Netzwerkknoten übertragen wird, die zwar beide zur Erzeugung quantensicherer Schlüssel (beispielsweise mittels eines Quantum Number Generators) ausgebildet sind, also über entsprechende quantentechnische Mittel und/oder Einrichtungen verfügen, aber selbst untereinander nicht in einer direkten QKD-Beziehung stehen, also nicht durch einen Quantenkanal direkt verbunden sind, so dass die Übertragung des quantensicheren Schlüssels über mindestens einen intermediären Netzwerkknoten erfolgen muss.

Dieser mindestens eine intermediäre Netzwerkknoten steht als Teil des Übertragungspfades für den quantensicheren Schlüssel (Nutzschlüssel) sowohl mit einem auf diesem Übertragungspfad vorhergehenden als auch mit einem auf dem Übertragungspfad nachfolgenden Netzwerkknoten in Verbindung. Gemäß der zur Lösung der Aufgabe vorgeschlagenen Lösung werden sowohl die als Teil des zur Übertragung des quantensicheren Nutzschlüssels auf klassischem Wege genutzten Pfades zwischen dem intermediären Netzwerkknoten und dem vorhergehenden Netzwerkknoten bestehende Verbindung als auch die auf diesem Pfad zwischen dem intermediären Netzwerkknoten und dem ihm nachfolgenden Netzwerkknoten bestehende Verbindung jeweils durch eine Einheit terminiert, welche die Verschlüsselung von Daten nach einem bekannten Verfahren der Post Quantum Cryptography (PQC) ermöglicht. Zu den insoweit für einen Einsatz in der eingangsseitigen und in der ausgangsseitig Einheit des intermediären Netzwerkknotens in Betracht kommenden PQC-Verfahren sollen am Ende dieser Beschreibung Beispiele genannt werden.

Innerhalb des intermediären Netzwerkknotens wird der Nutzschlüssel von der eingangsseitigen Einheit, welche den Nutzschlüssel mit einer von dem auf dem Übertragungspfad vorhergehenden Netzwerkknoten eingehenden Bitsequenz empfängt, an die ausgangsseitige Einheit, welche den Nutzschlüssel mit einer für einen auf dem Übertragungspfad nachfolgenden Netzwerkknoten bestimmten Bitsequenz aussendet, in Form einer Bitsequenz übertragen, die durch bitweise XOR-Verknüpfung des Nutzschlüssels mit einem zwischen der eingangsseitigen Einheit und der ausgangsseitigen Einheit nach einem PQC-Verfahren ausgehandelten Schlüssel (PQC-Schlüssel) gebildet wird. Demnach liegt der Nutzschlüssel erfindungsgemäß in dem intermediären Netzwerkknoten außerhalb dessen eingangsseitiger und der ausgangsseitiger Einheit nur in Form der durch bitweise XOR-Verknüpfung mit dem PQC-Schlüssel gebildeten Bitsequenz vor.

Grundsätzlich ist es denkbar, dass der intermediäre Netzwerkknoten unmittelbar den zu übertragenden quantensicheren Nutzschlüssel von dem ihm auf dem Übertragungspfad vorhergehenden Netzwerkknoten über einen klassischen, aber gegebenenfalls in besonderer Weise gesicherten Kanal als Bitsequenz empfängt und diesen dann ausgangsseitig in gleicher Weise über einen ebensolchen Kanal an den ihm auf dem Übertragungspfad nachfolgenden Netzwerkknoten aussendet.

Zur Erhöhung der Sicherheit bei der Übertragung des Nutzschlüssels, nämlich des Übertragungsvorgangs zwischen den Netzwerkknoten, ist das Verfahren aber vorzugsweise so gestaltet, dass der intermediäre Netzwerkknoten den quantensicheren Nutzschlüssel eingangsseitig von dem vorhergehenden Netzwerkknoten mit einer Bitsequenz empfängt, die von dem vorhergehenden Netzwerkknoten durch bitweise XOR-Verknüpfung des Nutzschlüssels mit einem gemeinsamen, das heißt sowohl bei dem intermediären als auch bei dem ihm vorhergehenden Netzwerkknoten vorliegenden Schlüssel gebildet wird. Die Gestaltung des Verfahrens ist hierbei ferner so, dass der intermediäre Netzwerkknoten den Nutzschlüssel ausgangsseitig an den ihm nachfolgenden Netzwerkknoten mit einer Bitsequenz aussendet, die von dem intermediären Netzwerkknoten durch bitweise XOR-Verknüpfung des Nutzschlüssels mit einem gemeinsamen, das heißt sowohl bei dem intermediären als auch bei dem ihm nachfolgenden Netzwerkknoten vorliegenden Quantenschlüssel gebildet wird.

Dabei könnte es sich bei dem mit dem vorhergehenden Netzwerkknoten gemeinsamen Schlüssel und bei dem mit dem nachfolgenden Netzwerkknoten gemeinsamen Schlüssel jeweils beispielsweise ebenfalls um einen PQC-Schlüssel, also um einen mit dem jeweiligen Netzwerkknoten nach einem Verfahren der Post Quantum Cryptography ausgehandelten Schlüssel handeln.

Besonders bevorzugt ist es jedoch, wenn der intermediäre Netzwerkknoten sowohl mit dem vorhergehenden Netzwerkknoten als auch mit dem ihm nachfolgenden Netzwerkknoten jeweils in einer QKD-Beziehung steht, er also mit diesen gemeinsame Schlüssel nach dem Verfahren der Quantum Key Distribution aushandelt und austauscht. Demgemäß ist es besonders bevorzugt, wenn der intermediäre Netzwerkknoten den zu übertragenden quantensicheren Nutzschlüssel eingangsseitig mit einer Bitsequenz empfängt, die von dem vorhergehenden Netzwerkknoten durch bitweise XOR-Verknüpfung des Nutzschlüssels mit einem Quantenschlüssel gebildet wird, der aufgrund der Anwendung eines QKD-Verfahrens als gemeinsamer Schlüssel in dem intermediären Netzwerkknoten und in dem ihm vorhergehenden Netzwerkknoten vorliegt. Analog wird hierbei der zu übertragende quantensichere Nutzschlüssel von dem intermediären Netzwercknoten an den ihm nachfolgenden Netzwerkknoten mit einer Bitsequenz ausgesendet, die in dem intermediären Netzwerkknoten durch bitweise XOR-Verknüpfung des Nutzschlüssels mit einem Quantenschlüssel gebildet wird, der aufgrund der Anwendung eines QKD-Verfahrens als gemeinsamer Schlüssel in dem intermediären Netzwerkknoten und in dem ihm nachfolgenden Netzwerkknoten vorliegt.

An dieser Stelle sollen einige bereits zuvor und nachfolgend sowie in den Patentansprüchen verwendete Begrifflichkeiten hinsichtlich ihres bei der Beschreibung der Erfindung und der Beanspruchung ihrer Merkmale zugrunde gelegten Verständnisses erläutert werden.

Demnach wird unter einem Quantenkanal ein Übertragungskanal zur Übertragung von quantenmechanischen Zuständen, beispielsweise nach einem QKD-Verfahren, verstanden. Demgegenüber handelt es sich bei klassischen Kanälen um Übertragungskanäle, welche nicht als Quantenkanäle ausgebildet sind und daher nicht zur Übertragung von Quantenzuständen geeignet sind, sondern der Übertragung digitaler Signale über Funk oder über eine leitungsbasierte elektrische oder optische Verbindung dienen. Bei Daten kann es sich entsprechend dem hier zugrunde gelegten Verständnis um Nutzdaten, wie mediale Daten, Daten eines sonstigen Contents oder Programmdaten, aber letztlich auch um Schlüssel (Schlüsseldaten) handeln.

Soweit es sich bei einem Quantenkanal um einen Quantenkanal zur Übertragung von Schlüsseln unter Nutzung eines QKD-Verfahrens handelt, ist einem solchen Kanal ein klassischer Kanal zugeordnet. Dieser dem Quantenkanal zugeordnete klassische Kanal ist zur Übertragung von Daten für das Schlüsselmanagement im Zusammenhang mit dem jeweils angewendeten QKD-Verfahren im Vergleich zu den vorgenannten klassischen Kanälen für die Nutzdaten in spezieller Weise gesichert. Derartige, für das Schlüsselmanagement im Rahmen eines QKD-Verfahrens genutzte klassische Kanäle müssen insbesondere über eine ausreichend hohe Bandbreite (10 Gbit/s oder mehr Übertragungskapazität) verfügen und durch Verschlüsselung gesichert sein.

Die Verwendung des Begriffs Nutzschlüssel für den entsprechend dem erfindungsgemäßen Verfahren über den Übertragungspfad mit dem intermediären Netzwerkknoten zu übertragenden quantensicheren Schlüssel dient dazu, diesen Schlüssel sprachlich von anderen Schlüsseln zu unterscheiden, die bei dem Verfahren und seinen möglichen Ausgestaltungsformen in Zusammenhang mit der Übertragung dieses Nutzschlüssels zum Einsatz gelangen. Im Hinblick auf die von dem Nutzschlüssel zu unterscheidenden Schlüssel seien beispielsweise Schlüssel, vorzugsweise quantensichere Schlüssel angesprochen, welche beispielsweise bei der bitweisen XOR-Verknüpfung mit dem Nutzschlüssel zum Zweck der Bildung der seiner Übertragung zwischen dem intermediären Netzwerkknoten und dem ihm vorhergehenden Netzwerkknoten oder dem ihm nachfolgenden Netzwerkknoten dienenden Bitsequenz verwendet werden. Insoweit sei angemerkt, dass es für eine einen Schlüssel darstellende oder einen solchen Schlüssel aufnehmende Bitsequenz als solches im Grunde nicht feststellbar ist, nach welchem Prinzip der betreffende Schlüssel gebildet wurde (zum Beispiel QKD oder PQC) oder zu welchem Zweck er später verwendet werden soll oder ob die Bitsequenz durch eine Verknüpfung, insbesondere eine bitweise XOR-Verknüpfung von Schlüsseln entstanden ist.

Zusammenfassend sei daher nochmals betont, dass es sich bei dem unter Nutzung des Verfahrens über den intermediären Netzwerkknoten zu übertragenden Nutzschlüssel jedenfalls um einen quantensicheren Schlüssel handelt. Bei dem zu seiner Übertragung über den Übertragungspfad insbesondere im Zusammenhang mit der Bildung von bitweisen XOR-Verknüpfungen verwendeten Schlüsseln kann es sich hingegen um quantensichere Schlüssel oder um PQC-Schlüssel handeln, wobei innerhalb des intermediären Netzwerkknotens zur Übertragung des Nutzschlüssels zwischen einer eingangsseitigen Einheit und einer ausgangsseitigen Einheit erfindungsgemäß jedenfalls ein PQC-Schlüssel, also ein nach einem Verfahren der Post Quantum Cryptography ausgehandelter Schlüssel, zum Einsatz kommt, welcher auch als Shared Secret bezeichnet wird. Bei der Übertragung des Nutzschlüssels zwischen dem intermediären Netzwercknoten und dem vorhergehenden sowie dem nachfolgenden Netzwerkknoten werden vorzugsweise quantensichere, nach einem QKD-Verfahren erzeugte und verteilte Schlüssel verwendet. Als PQC-Schlüssel werden bei der Darstellung der Erfindung die im Zusammenhang mit einem erfindungsgemäß verwendeten PQC-Verfahren zum Einsatz gelangenden Schlüssel bezeichnet.

Zu diesen Erläuterungen der verwendeten Begrifflichkeiten sei ergänzend noch angemerkt, dass die Begriffe quantensicherer Schlüssel und Quantenschlüssel in der Beschreibung und in den Patentansprüchen grundsätzlich synonym gebraucht werden, ihnen also ein synonymes Verständnis zugrunde liegt. Tendenziell wird hier aber im Zusammenhang mit dem mithilfe des intermediären Netzwerkknotens zu übertragenden Nutzschlüssel von einem quantensicheren Schlüssel und im Zusammenhang mit den gemeinsam bei dem intermediären Netzwerkknoten und dem vorhergehenden Netzwerkknoten oder mit den gemeinsam bei dem intermediären Netzwerkknoten und dem ihm nachfolgenden Netzwerkknoten vorliegenden Schlüssel - sofern hierbei ein QKD-Verfahren zum Einsatz gelangt - von einem Quantenschlüssel gesprochen. Auch dies dient ausschließlich der sprachlichen Unterscheidung. Ein technischer Unterschied ist hiermit nicht verbunden.

Abschließend sei betont, dass es sich bei einer im Kontext der Darstellungen zur Erfindung angesprochenen XOR-Verknüpfung stets um eine bitweise XOR-Verknüpfung handelt, und zwar auch, wenn dies einmal nicht ausdrücklich angegeben sein sollte.

Der erfindungsgemäß zur Übertragung des Nutzschlüssels zwischen der eingangsseitigen Einheit und der ausgangsseitigen Einheit innerhalb des intermediären Netzwerkknotens verwendete PQC-Schlüssel, also das Shared Secret, wird vorzugsweise zwischen den beiden vorgenannten Einheiten unter Nutzung eines Encapsulation Algorithmus ausgehandelt. Grundsätzlich wäre es hierbei denkbar, dass ein entsprechender PQC-Schlüssel (Shared Secret) jeweils beim Eingang eines über den intermediären Netzwerkknoten zu übertragenden Nutzschlüssels zwischen den beiden Einheiten ausgehandelt und dann in der eingangsseitigen Einheit durch bitweise XOR-Verknüpfung auf den zu übertragenden Nutzschlüssel und in der ausgangsseitigen Einheit abermals zur bitweisen XOR-Verknüpfung mit der in der eingangsseitigen Einheit gebildeten Bitsequenz angewendet wird.

Vorzugsweise ist jedoch das Verfahren so ausgestaltet, dass zwischen der eingangsseitigen Einheit und der ausgangsseitigen Einheit des intermediären Netzwerkknotens eine größere Zahl von PQC-Schlüsseln ausgehandelt wird, welche jede der Einheiten in einem ihr zugordneten Schlüsselspeicher ablegt. Der hierbei jeweils zur bitweisen XOR-Verknüpfung eines über den intermediären Netzwercknoten zu übertragenden Nutzschlüssels verwendete PQC-Schlüssel wird von einem den Einheiten zugeordneten Schlüsselmanagement unter Angabe eines diesen PQC-Schlüssel eindeutig bezeichnenden Identifikators ausgewählt.

Entsprechend einer vorgesehenen Ausgestaltung des erfindungsgemäßen Verfahrens authentifizieren sich die eingangsseitige und die ausgangsseitige Einheit des intermediären Netzwerkknotens, also die entsprechenden PQC-Server, jeweils vor Aushandlung eines oder mehrerer PQC-Schlüssel untereinander. In diesem Zusammenhang ist es auch denkbar, dass die eingangsseitige Einheit und die ausgangsseitige Einheit fortwährend PQC-Schlüssel untereinander aushandeln und in einem hinreichend großen Schlüsselspeicher ablegen und sich überhaupt nur einmalig oder im Falle einer Unterbrechung des Betriebs des intermediären Netzwerkknotens oder der PQC-Schlüsselerzeugung gegenseitig authentifizieren.

Die Authentifikation kann beispielsweise durch Zusendung einer bekannten, mit dem privaten Schlüssel einer jeweiligen Einheit signierten Nachricht erfolgen. Dafür wird vorzugsweise ein PQC-Signaturalgorithmus verwendet. Bei einer praxisgerechten Implementierung des Verfahrens wird die Anwendung des PQC-Verfahrens stets in Verbindung mit einem PQC-Authentifizierungsvorgang erfolgen, zumal bekannte PQC-Verfahren regelmäßig eine entsprechende Authentifizierung beider, die verschlüsselten Daten (respektive auch verschlüsselte Schlüssel) austauschenden Seiten einschließen.

Ein zur Lösung der Aufgabe vorgeschlagener und zur Durchführung des zuvor erläuterten Verfahrens geeigneter Netzwerkknoten, nämlich ein intermediärer Netzwerkknoten, welcher Teil eines Übertragungspfades zur Übertragung eines quantensicheren Nutzschlüssels über einen klassischen Kanal ist, steht sowohl mit einem auf dem Übertragungspfad vorhergehenden als auch mit einem auf dem Übertragungspfad nachfolgenden Netzwerkknoten jeweils in einer QKD-Beziehung. Der entsprechende intermediäre Netzwerkknoten ist hierbei ausgestattet mit:
a.) Mitteln, die ausgebildet sind zur quantentechnischen Erzeugung kryptographischer Schlüssel sowie für das Management erzeugter quantensicherer Schlüssel und zum Aufbau je eines Quantenkanals zur Schlüsselverteilung nach dem QKD-Prinzip, mit dem auf dem Übertragungspfad vorhergehenden Netzwerkknoten und mit dem nachfolgenden Netzwerkknoten, sowie zur Bereitstellung je eines, bei der Nutzung des QKD-Prinzips zu dem jeweiligen Quantenkanal gehörenden Protokoll-Links (klassischer Kanal),
b.) Mitteln zur lokalen Speicherung von Schlüsseln und zu deren Verwaltung, respektive für das Management der Verwendung dieser Schlüssel (providerspezifisches Schlüsselmanagement),
c.) Mitteln zum Aufbau je einer den klassischen Kanal für den Übertragungspfad zur Übertragung des Nutzschlüssels nutzenden Verbindung zu dem vorhergehenden Netzwerkknoten und zu dem nachfolgenden Netzwerkknoten.

Erfindungsgemäß werden bei dem intermediären Netzwerkknoten unter Nutzung des klassischen Kanals zur Übertragung des quantensicheren Nutzschlüssels zu dem vorhergehenden und zu dem nachfolgenden Netzwerkknoten aufgebaute Verbindungen eingangsseitig und ausgangsseitig durch Einheiten terminiert, welche dazu ausgebildet sind:
- untereinander PQC-Schlüssel, nämlich Schlüssel nach einem bekannten, gegebenenfalls mehr oder weniger etablierten PQC-Verfahren, das heißt nach einem Verfahren der Post Quantum Cryptography, auszuhandeln und
- Bitsequenzen miteinander durch bitweise Anwendung der XOR-Operation miteinander zu verknüpfen und
- einen über den Übertragungspfad mittels des intermediären Netzwerkknotens geführten Nutzschlüssel untereinander als eine durch bitweise XOR-Verknüpfung dieses Nutzschlüssels mit einem zwischen der eingangsseitigen Einheit und der ausgangsseitigen Einheit ausgehandelten PQC-Schlüssel gebildete Bitsequenz zu übertragen.

Hierbei ist durch das letztgenannte, die Beschaffenheit der eingangsseitigen und der ausgangsseitigen Einheit des intermediären Netzwerkknotens charakterisierende Merkmal sichergestellt, dass ein jeweils zu übertragender Nutzschlüssel in dem intermediären Netzwerkknoten außerhalb dieser Einheiten ausschließlich in Form der durch bitweise XOR-Verknüpfung mit dem PQC-Schlüssel (nach einem PQC-Verfahren ausgehandelten Schlüssel) gebildeten Bitsequenz vorliegt. Zur Realisierung der vorgenannten (in gegliederter Form angegebenen) Funktionen weisen die eingangsseitige und die ausgangsseitige Einheit insbesondere jeweils eine Einheit zur Ver- und Entschlüsselung (Ver-/Entschlüsseler) und jeweils einen PQC-Server auf.

Entsprechend einer praxisgerechten und demnach bevorzugten Ausgestaltung sind die, die zu dem vorhergehenden und dem nachfolgenden Netzwerkknoten aufgebauten, den klassischen Kanal nutzenden Verbindungen terminierenden Einheiten, also die zuvor angesprochene eingangsseitige Einheit sowie die ausgangsseitige Einheit, jeweils als hardwaretechnisch gehärtete Einheiten ausgebildet. Besonders bevorzugt ist es hierbei, dass eine jeweilige Einheit gemeinsam mit einer der Speicherung mit der jeweils anderen Einheit ausgehandelter PQC-Schlüssel dienenden Speichereinheit in einem Hardware-Sicherheitsmodul (HSM) angeordnet ist. Auch eine Einheit oder Einheiten für das Management der PQC-Schlüssel kann/können mit in dem entsprechenden HSM untergebracht sein.

Nachfolgend soll ein Ausführungsbeispiel der Erfindung gegeben und im Zusammenhang mit einer Zeichnung sowie im Vergleich zum Stand der Technik erläutert werden. Die zugehörigen Zeichnungen zeigen:
- Fig. 1:: eine mögliche Ausbildungsform eines erfindungsgemäßen intermediären Netzwerkknotens,
- Fig. 2:: einen intermediären Netzwerkknoten nach dem Stand der Technik.

In den Zeichnungen und den nachstehenden Erläuterung bezeichnet das Symbol ⊕ den XOR-Operator und steht jeweils für eine bitweise XOR-Verknüpfung der beidseits des Operators angegebenen Schlüssel und/oder Bitsequenzen.

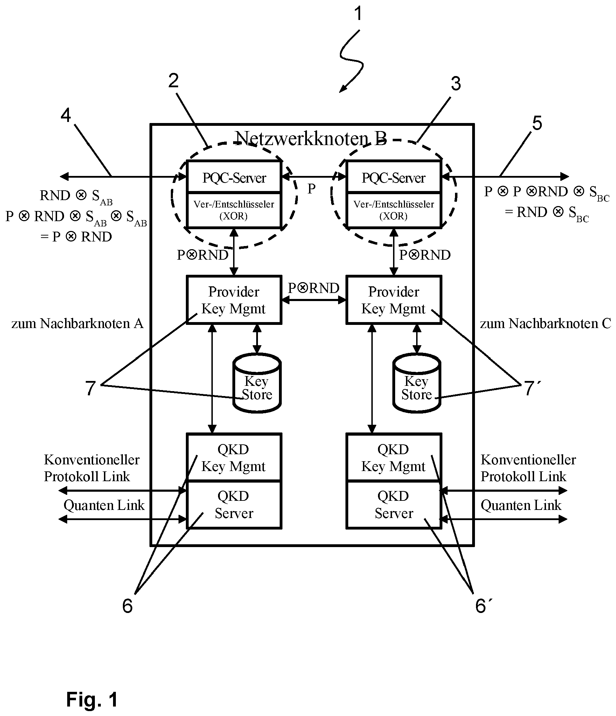

Die Fig. 1 zeigt in einer schematischen Darstellung eine mögliche Ausbildungsform des intermediären Netzwerkknotens 1. In der Darstellung ist der erfindungsgemäße intermediäre Netzwerkknoten 1 als Netzwerkknoten B bezeichnet, da er als intermediärer Netzwerkknoten 1 zwischen zwei (hier nicht gezeigten) anderen Netzwerkknoten A und C angeordnet ist. Der intermediäre Netzwerkknoten 1 (Netzwerkknoten B) ist Teil eines Übertragungspfades über den mindestens ein (in der Praxis vorzugsweise mehrere) quantensichere(r) Nutzschlüssel zwischen Netzwerkknoten (nicht gezeigte Netzwerkknoten A und C) übertragen wird/werden, welche zwar zur Erzeugung quantensicherer Schlüssel ausgebildet, aber selbst - beispielsweise aufgrund einer großen Entfernung zueinander - nicht direkt über einen Quantenkanal (Quanten Link) miteinander verbunden sind.

Bei dem dargestellten Ausführungsbeispiel wird davon ausgegangen, dass der intermediäre Netzwerkknoten 1 sowohl mit dem ihm auf dem Übertragungspfad vorhergehenden Netzwerkknoten (Netzwerkknoten A) als auch mit dem ihm nachfolgenden Netzwerkknoten (Netzwerkknoten C) jeweils in einer QKD-Beziehung steht. Dies heißt, der intermediäre Netzwerkknoten 1 kann mit dem vorhergehenden Netzwerkknoten sowie mit dem nachfolgenden Netzwerkknoten jeweils nach einem Verfahren der Quantum Key Distribution erzeugte quantensichere Schlüssel austauschen (genauer gesagt, quantensichere Schlüssel im Zuge ihres gleichzeitigen Austausches gemeinsam erzeugen) und als gemeinsame Schlüssel verwenden. Der intermediäre Netzwerkknoten 1 verfügt demnach über Mittel 6; 6' zum Aufbau je eines Quantenkanals zu den benachbarten Knoten, also zu dem vorhergehenden Netzwerkknoten und zu dem nachfolgenden Netzwercknoten.

Die entsprechenden Mittel 6; 6' sind zudem zur Bereitstellung je eines, bei der Nutzung des QKD-Prinzips, dem jeweiligen Quantenkanal zugeordneten Protokoll-Links ausgebildet. Der betreffende Link wird jeweils über einen klassischen, das heißt nicht zur Übertragung quantenmechanischer Zustände geeigneten, aber in besonderer Weise gesicherten Übertragungskanal aufgebaut. Die die zuvor erläuterten Funktionen bewerkstelligenden Mittel 6; 6' des intermediären Netzwerkknotens sind in der Zeichnung als eingangsseitig und ausgangsseitig angeordnete QKD-Server (QKD Server) mit zugehörigem QKD-Schlüsselmanagement (QKD Key Mgmt) erkennbar.

Während es sich bei dem vorgenannten, mit dem eingangsseitigen QKD-Server in Wirkverbindung stehenden QKD-Schlüsselmanagement beziehungsweise bei dem mit dem ausgangsseitigen QKD-Server in Wirkverbindung stehenden QKD-Schlüsselmanagement jeweils um ein herstellerabhängiges (herstellerspezifisches) Schlüsselmanagement, nämlich um ein bezüglich seiner Beschaffenheit durch den Hersteller der QKD-Systeme (Mittel 6, 6') bestimmtes und ausschließlich durch diesen Hersteller beeinflussbares Management handelt, ist in dem intermediären Netzwerkknoten eingangsseitig und ausgangsseitig außerdem je ein herstellerunabhängiges Schlüsselmanagement vorgesehen.

Bei dem letztgenannten, herstellerunabhängigen Schlüsselmanagement handelt es sich um ein durch den Provider, das heißt den Betreiber des intermediären Netzwerkknotens, bestimmtes und daher als providerspezifisches Schlüsselmanagement (Provider Key Mgmt) anzusehendes Management. Dieses providerspezifische Schlüsselmanagement dient jeweils insbesondere auch der Verwaltung und dem Management der innerhalb des intermediären Netzwerkknotens genutzten, in einem entsprechenden Speicher gehaltenen PQC-Schlüssel - Das (jeweilige) providerspezifische Schlüsselmanagement und der mit dessen Hilfe verwaltete Schlüsselspeicher sind in der Figur, korrespondieren mit den Patentansprüchen, als Mittel 7; 7' bezeichnet. Alle vorgenannten Funktionsgruppen interagieren jeweils mit einer, eine der Übertragung des Nutzschlüssels dienende Verbindung zu einem Nachbarknoten terminierenden Einheit (eingangsseitige Einheit 2 und ausgangsseitige Einheit 3), das heißt die Mittel 6, 7 mit der Einheit 2 und die Mittel 6', 7'mit der Einheit 3.

Es sei angenommen, ein quantensicherer Nutzschlüssel soll über den dargestellten intermediären Netzwerkknoten 1 (Netzwerkknoten B) von einem Netzwercknoten A zu einem Netzwerkknoten C, in der Zeichnung von links nach rechts, übertragen werden. Insoweit handelt es sich bei der links dargestellten, aus einer als PQC-Server bezeichneten Funktionsgruppe und aus einer als Ver-/Entschlüsseler bezeichneten Funktionsgruppe bestehenden Einheit um eine eingangsseitige, die Verbindung 4 mit dem (nicht gezeigten) vorhergehenden Netzwerkknoten (Netzwerkknoten A) terminierende Einheit 2. Demgemäß stellt die rechts gezeigte, ebenfalls aus einem PQC-Server und einem Ver-/Entschlüsseler bestehende Einheit 3 eine ausgangsseitige, die Verbindung 5 zu dem nachfolgenden Netzwerkknoten (Netzwerkknoten C) terminierende Einheit 3 dar. Die eingangsseitige Einheit 2 und die ausgangsseitige Einheit 3 sind jeweils als hardwaretechnisch gehärtete Einheiten ausgebildet. Das heißt, es ist dem Grunde nach nicht möglich, an innerhalb der betreffenden Einheit befindliche Daten beziehungsweise verarbeitete Bitsequenzen heranzukommen, ohne die entsprechende Einheit und vorzugsweise auch die darin befindlichen Daten selbst zu zerstören.

Bei der Übertragung eines quantensicheren Nutzschlüssels über den dargestellten intermediären Netzwerkknoten 1 vollzieht sich beispielsweise folgender Ablauf. Eingangsseitig geht über den klassischen Kanal, das heißt über die als Teil des Übertragungspfades für den quantensicheren Nutzschlüssel zu dem vorhergehenden Netzwerkknoten bestehende Verbindung 4 eine Bitfolge ein, welche in dem vorhergehenden Netzwerkknoten (Netzwerkknoten A) gebildet wurde durch bitweise XOR-Verknüpfung des zu übertragenden quantensicheren Nutzschlüssels (Zufallszahl RND) mit einem aufgrund der Nutzung des QKD-Prinzips in dem intermediären Netzwerkknoten und in dem vorhergehenden Netzwerkknoten gemeinsam vorliegenden Quantenschlüssel S_{AB}.

Diese Bitfolge RND ⊕ S_{AB} wird in der eingangsseitigen Einheit 2 bitweise XORverknüpft mit einem früher zwischen der eingangsseitigen und der ausgangsseitigen Einheit 2, 3 ausgehandelten PQC-Schlüssel (Shared Secret), der durch das providerspezifische Schlüsselmanagement (als Teil der Mittel 7) ausgewählt und aus dem zugehörigen lokalen Schlüsselspeicher (ebenfalls Teil der Mittel 7) bezogen wird, sowie mit dem zuvor schon von dem vorhergehenden Netzwerkknoten verwendeten, in diesem sowie in dem intermediären Netzwerkknoten 1als gemeinsamer Schlüssel vorliegenden Quantenschlüssel. Infolgedessen wird durch die eingangsseitige Einheit 2 innerhalb des intermediären Netzwerkknotens an dessen ausgangsseitige Einheit die Bitfolge P ⊕ RND ⊕ S_{AB} ⊕ S_{AB} = P ⊕ RND übertragen.

In der ausgangsseitigen Einheit 3 wird diese Bitfolge abermals mit demselben PQC-Schlüssel (Shared Secret P) und außerdem mit einem Quantenschlüssel durch bitweise Anwendung des XOR-Operators verknüpft, bei welchem es sich um einen gemeinsamen Quantenschlüssel des intermediären Netzwerkknotens 1 mit dem nachfolgenden Netzwerkknoten (Netzwerkknoten C) handelt. Die hieraus im Ergebnis resultierenden Bitfolge, nämlich P ⊕ P ⊕ RND ⊕ S_{BC} = RND ⊕ S_{BC}, wird dann durch den intermediären Netzwerkknoten 1 (Netzwerkknoten B) an den nachfolgenden Netzwerkknoten ausgesendet. Hier kann sie durch abermalige Verknüpfung mit demselben, bereits zuvor verwendeten gemeinsamen Quantenschlüssel S_{BC} des intermediären Netzwerkknotens 1 und des nachfolgenden Netzwerkknotens zur Extraktion des zu übertragenden Nutzschlüssels RND verarbeitet werden.

Der besondere Vorteil des zuvor nochmals dargestellten Verfahrens und des zu seiner Ausführung geeigneten, in der Fig. 1 gezeigten intermediären Netzwercknotens 1 besteht darin, dass der zwischen den Netzwerkknoten A und C zu übertragende quantensichere Schlüssel in dem intermediären Netzwerkknoten 1 außerhalb der die jeweiligen Verbindungen 4, 5 des Übertragungspfades terminierenden Einheiten 2, 3 nur in der Form einer bitweisen XOR-Verknüpfung mit einem PQC-Schlüssel (Shared Secret) vorliegt und demnach auch nicht für den Provider, das heißt für den Betreiber des intermediären Netzwerkknotens, zugänglich ist.

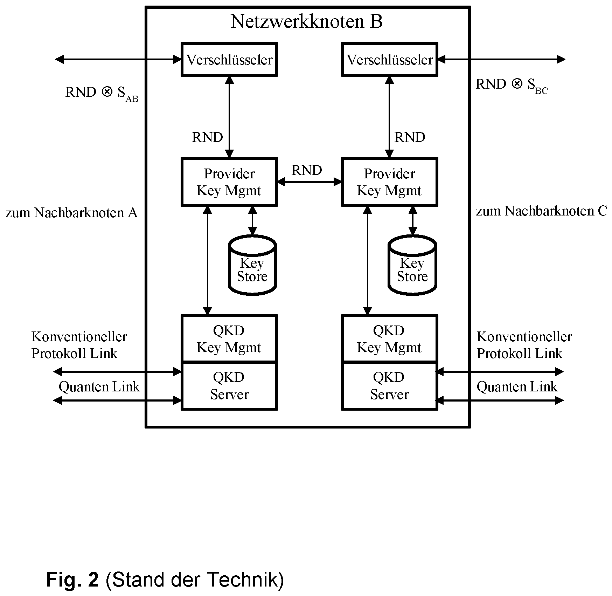

Demgegenüber zeigt die Fig. 2, ebenfalls in einer schematischen Darstellung, einen intermediären Netzwerkknoten (Netzwerkknoten B), wie er nach dem Stand der Technik vorgeschlagen wird und gegebenenfalls bereits zum Einsatz gelangt. Auch dieser intermediäre Netzwerkknoten steht mit benachbarten Netzwerkknoten, also einem auf einem Übertragungspfad für einen über einen klassischen Kanal übertragenen quantensicheren Schlüssel vorhergehenden Netzwerkknoten (Netzwerkknoten A) und einem nachfolgenden Netzwerkknoten (Netzwerkknoten C) , in einer QKD-Beziehung. Er verfügt demnach über Mittel zum Aufbau je eines Quantenkanals (QKD-Kanals) zu den vorgenannten, benachbarten Netzwerkknoten sowie zur Herstellung je eines zugehörigen, für die Verwendung eines QKD-Verfahrens notwendigen Management-Links (klassischen Kanals). Da es sich bei dem in der Fig. 2 gezeigten intermediären Netzwerkknoten um den Stand der Technik handelt, wurde in dieser Figur bewusst auf das Antragen von Bezugszeichen verzichtet.

Bezogen auf den Übertragungspfad zur Übertragung des quantensicheren Nutzschlüssels verfügt der intermediäre Netzwerkknoten eingangsseitig und ausgangsseitig jeweils über einen Ver-/Entschlüsseler. Mittels des eingangsseitigen Ver-/Entschlüsselers (und des zugehörigen Provider Key Managements, das heißt des providerspezifischen Schlüsselmanagements, mit zugehörigem Schlüsselspeicher) wird eine von dem vorhergehenden Netzwerkknoten empfangene Bitsequenz, bei welcher es sich um eine bitweise XOR-Verknüpfung des zu übertragenden Nutzschlüssels mit einem gemeinsamen Quantenschlüssel des intermediären Netzwerkknotens und des vorhergehenden Netzwerkknotens handelt, (abermals) mit demselben, aufgrund der Nutzung des QKD-Prinzips, sowohl in dem intermediären Netzwerkknoten als auch in dem vorhergehenden Netzwercknoten vorliegenden Quantenschlüssel durch bitweise Anwendung des XOR-Operators verknüpft. Im Ergebnis dessen liegt hinter dem eingangsseitigen Ver-/Entschlüsseler innerhalb des intermediären Netzwerkknotens der zu übertragende quantensichere Nutzschlüssel RND für den Provider, als den Betreiber des Netzwerkknotens, vor.

Daher muss dieser intermediäre Netzwerkknoten mit geeigneten Mitteln gesichert, nämlich als Trusted Node ausgebildet, respektive der gesamte Netzwercknoten in einer Trusted Zone angeordnet werden, um einen Zugriff potenzieller Angreifer auf diesen quantensicheren Nutzschlüssel sicher zu verhindern. Ungeachtet dessen ist aber der Nutzschlüssel dem Provider, das heißt dem Betreiber des intermediären Netzwerkknotens und dessen Mitarbeitern, zugänglich, wobei ein Nutzer, das heißt ein Verwender des quantensicheren Nutzschlüssels, folglich absolutes Vertrauen in den Provider haben muss, dass dieser einen illegalen Zugriff auf den Nutzschlüssel durch Dritte wirksam verhindert und diesen auch nicht in irgendeiner Weise für seine eigenen Zwecke nutzt.

Zur sicheren Weiterleitung an den dem intermediären Netzwerkknoten nachfolgenden Netzwerkknoten wird der quantensichere Schlüssel in dem ausgangsseitigen Ver-/Entschlüsseler des intermediären Netzwerkknotens bitweise XOR-verknüpft mit einem Quantenschlüssel, welcher durch Anwendung des QKD-Prinzips (Nutzung des QKD-Servers, des Quantenkanals und des zugehörigen Management-Links) als gemeinsamer Schlüssel bei dem intermediären Netzwerkknoten und bei dem nachfolgenden Netzwerkknoten vorliegt. Der die entsprechende, durch bitweise XOR-Verknüpfung gebildete Bitsequenz empfangende nachfolgenden Netzwerkknoten (Netzwerkknoten C) kann schließlich durch abermalige bitweise XOR-Verknüpfung der empfangenen Bitsequenz mit dem bereits schon zuvor genutzten gemeinsamen Quantenschlüssel aus dieser den zu übertragenden quantensicheren Nutzschlüssel extrahieren.

Bei dem erfindungsgemäß innerhalb des intermediären Netzwerkknotens zum Einsatz gelangenden PQC-Verfahren handelt es sich, wie ausgeführt um eines von dazu mehreren bekannten Verfahren. Das PQC-Verfahren selbst ist demnach nicht Gegenstand der Erfindung. Wie ebenfalls ausgeführt, geht vorzugsweise der Aushandlung eines oder mehrerer PQC-Schlüssel zwischen der eingangsseitigen Einheit des intermediären Netzwerkknoten und dessen ausgangsseitiger Einheit nach einem solchen PQC-Verfahren eine gegenseitige Authentifizierung der vorgenannten Einheiten voraus. Hierzu tauschen die Einheiten beispielsweise eine von der jeweils aussendenden Einheit mittels eines privaten (geheimen) Schlüssels signierte Nachrichten aus, wobei das Signieren der Nachrichten vorzugsweise nach einem PQC-Signierverfahren erfolgt.

Zur Aushandlung von PQC-Schlüsseln und für das Signieren von Nachrichten mittels PQC sind bereits mehrere Verfahren bekannt geworden. Da es sich bei diesen PQC-Verfahren zur Aushandlung eines gemeinsamen Schlüssel und zum Signieren von Nachrichten um eine noch verhältnismäßig neue technische Lösung handelt, sind allenfalls erst einige davon schon in gewisser Weise etabliert. Ungeachtet dessen sollen nachfolgend die vorstehenden Ausführungen vervollständigend, jedoch ohne Anspruch auf Vollständigkeit, insoweit bekannt gewordene Verfahren genannt werden.

### Verfahren zur PQC-Verschlüsselung

"BIKE1-L1-CPA", "BIKE1-L3-CPA", "BIKE1-L1-FO", "BIKE1-L3-FO", "Kyber512", "Kyber768", "Kyber1024", "Kyber512-90s", "Kyber768-90s", "Kyber1024-90s", "LEDAcryptKEM-LT12", "LEDAcryptKEM-LT32", "LEDAcryptKEM-LT52", "NewHope-512-CCA", "NewHope-1024-CCA", "NTRU-HPS-2048-509", "NTRU-HPS-2048-677", "NTRU-HPS-4096-821", "NTRU-HRSS-701", "LightSaber-KEM", "Saber-KEM", "FireSaber-KEM", "BabyBear", "BabyBearEphem", "MamaBear", "MamaBearEphem", "PapaBear", "PapaBearEphem", ,FrodoKEM-640-AES", "FrodoKEM-640-SHAKE", "FrodoKEM-976-AES", "FrodoKEM-976-SHAKE", "FrodoKEM-1344-AES", "FrodoKEM-1344-SHAKE", "SIDH-p434", "SIDH-p503", "SIDH-p610", ,SIDH-p751", "SIDH-p434-compressed", "SIDH-p503-compressed", "SIDH-p610-compressed", "SIDH-p751-compressed", "SIKE-p434", "SIKE-p503", "SIKE-p610", "SIKE-p751", "SIKE-p434-compressed", "SIKE-p503-compressed", "SIKE-p610-compressed", "SIKE-p751-compressed".

### PQC-Signierverfahren

"DILITHIUM_2", "DILITHIUM_3", "DILITHIUM_4", "MQDSS-31-48", MQDSS-31-64", SPHINCS+-Haraka-128f-robust", SPHINCS+-Haraka-128f-simple", "SPHINCS+-Haraka-128s-robust", "SPHINCS+-Haraka-128s-simple", "SPHINCS+-Haraka-192f-robust", "SPHINCS+-Haraka-192f-simple", "SPHINCS+-Haraka-192s-robust", "SPHINCS+-Haraka-192s-simple", "SPHINCS+-Haraka-256f-robust", "SPHINCS+-Haraka-256f-simple", "SPHINCS+-Haraka-256s-robust", "SPHINCS+-Haraka-256s-simple", "SPHINCS+-SHA256-128f-robust", "SPHINCS+-SHA256-128f-simple", "SPHINCS+-SHA256-128s-robust", "SPHINCS+-SHA256-128s-simple", "SPHINCS+-SHA256-192f-robust", "SPHINCS+-SHA256-192f-simple", "SPHINCS+-SHA256-192s-robust", "SPHINCS+-SHA256-192s-simple", "SPHINCS+-SHA256-256f-robust", "SPHINCS+-SHA256-256f-simple", "SPHINCS+-SHA256-256s-robust", "SPHINCS+-SHA256-256s-simple", "SPHINCS+-SHAKE256-128f-robust", "SPHINCS+-SHAKE256-128f-simple", "SPHINCS+-SHAKE256-128s-robust", "SPHINCS+-SHAKE256-128s-simple", "SPHINCS+-SHAKE256-192f-robust", "SPHINCS+-SHAKE256-192f-simple", "SPHINCS+-SHAKE256-192s-robust", "SPHINCS+-SHAKE256-192s-simple", "SPHINCS+-SHAKE256-256f-robust", "SPHINCS+-SHAKE256-256f-simple", "SPHINCS+-SHAKE256-256s-robust", "SPHINCS+-SHAKE256-256s-simple",m "picnic_L1_FS", "picnic_L1_UR", "picnic_L3_FS", "picnic_L3_UR", "picnic_L5_FS", "picnic_L5_UR", "picnic2_L1_FS", "picnic2_L3_FS", "picnic2_L5_FS", "qTesla-p-I", "qTesla-p-III".

## Patentansprüche

1. Verfahren zur Übertragung eines quantensicheren Schlüssels zwischen zwei mit Mitteln zur Erzeugung quantensicherer Schlüssel ausgestatteten, aber untereinander nicht über einen Quantenkanal direkt verbundenen Netzwerkknoten, bei dem der später als Nutzschlüssel zur gesicherten Datenübertragung zwischen den beiden Netzwerkknoten dienende quantensichere Schlüssel in einem der beiden Netzwerkknoten erzeugt und an den anderen Netzwerkknoten über einen Übertragungspfad mit mindestens einem intermediären Netzwerkknoten (1) übertragen wird, **dadurch gekennzeichnet, dass** der Nutzschlüssel innerhalb des intermediären Netzwerkknotens (1) von einer eingangsseitigen Einheit (2), welche den Nutzschlüssel mit einer von einem auf dem Übertragungspfad vorhergehenden Netzwerkknoten eingehenden Bitsequenz empfängt, an eine ausgangsseitige Einheit (3), welche den Nutzschlüssel mit einer für einen auf dem Übertragungspfad nachfolgenden Netzwerkknoten bestimmten Bitsequenz aussendet, in Form einer durch bitweise XOR-Verknüpfung des Nutzschlüssels mit einem zwischen der eingangsseitigen Einheit (2) und der ausgangsseitigen Einheit (3) nach einem PQC-Verfahren, das heißt einem Verfahren der Post Quantum Cryptography, ausgehandelten PQC-Schlüssel gebildeten Bitsequenz übertragen wird, wobei der Nutzschlüssel in dem intermediären Netzwerkknoten (1) außerhalb der eingangsseitigen und der ausgangsseitigen Einheit (2, 3) nur in Form der durch bitweise XOR-Verknüpfung mit dem PQC-Schlüssel gebildeten Bitsequenz vorliegt.

2. Verfahren nach Anspruch 1, wobei der intermediäre Netzwerkknoten (1) sowohl mit dem auf dem Übertragungspfad vorhergehenden als auch mit dem auf dem Übertragungspfad nachfolgenden Netzwerkknoten in einer QKD-Beziehung steht und wobei der intermediäre Netzwerkknoten (1) den zu übertragenden Nutzschlüssel, bezogen auf die Übertragungsrichtung des Nutzschlüssels auf dem Übertragungspfad, eingangsseitig mit einer Bitsequenz empfängt, die von dem vorhergehenden Netzwerkknoten durch bitweise XOR-Verknüpfung des Nutzschlüssels mit einem gemeinsamen, sowohl bei dem intermediären Netzwerkknoten (1) und als auch bei dem ihm vorhergehenden Netzwerkknoten vorliegenden Quantenschlüssel gebildet wird und wobei der intermediäre Netzwercknoten (1) den Nutzschlüssel ausgangsseitig an den ihm nachfolgenden Netzwerkknoten mit einer Bitsequenz aussendet, die von dem intermediären Netzwerkknoten (1) durch bitweise XOR-Verknüpfung des Nutzschlüssels mit einem gemeinsamen, sowohl bei dem intermediären Netzwerkknoten (1) als auch bei dem ihm nachfolgenden Netzwerkknoten vorliegenden Quantenschlüssel gebildet wird, **dadurch gekennzeichnet, dass** die bei dem intermediären Netzwercknoten (1) eingangsseitig eingehende Bitsequenz von seiner eingangsseitigen Einheit (2) sowohl mit dem bei der Erzeugung dieser Bitsequenz verwendeten gemeinsamen, in dem intermediären Netzwerkknoten (1) und in dem vorhergehenden Netzwerkknoten vorliegenden Quantenschlüssel als auch mit dem mit der ausgangsseitigen Einheit (3) ausgehandelten PQC-Schüssel bitweise XORverknüpft und dann an die ausgangsseitige Einheit (3) des intermediären Netzwerkknotens (1) übertragen wird und dass die durch die ausgangsseitige Einheit (3) von der eingangsseitigen Einheit (2) empfangene Bitsequenz in der ausgangsseitigen Einheit (3) des intermediären Netzwerkknotens (1) sowohl mit dem mit der eingangsseitigen Einheit (2) ausgehandelten PQC-Schlüssel als auch mit einem gemeinsamen, in dem intermediären Netzwerkknoten (1) und in dem ihm nachfolgenden Netzwerkknoten vorliegenden Quantenschlüssel bitweise XORverknüpft wird.

3. Verfahren nach Anspruch 1 oder 2, **dadurch gekennzeichnet, dass** der PQC-Schlüssel zwischen der eingangsseitigen Einheit (2) und der ausgangsseitigen Einheit (3) unter Nutzung eines Encapsulation Algorithmus ausgehandelt wird.

4. Verfahren nach einem der Ansprüche 1 bis 3, **dadurch gekennzeichnet, dass** die eingangsseitige Einheit (2) und die ausgangsseitige Einheit (3) des intermediären Netzwerkknotens (1) eine Mehrzahl von PQC-Schlüsseln aushandelt, welche jede der Einheiten (2, 3) in einem ihr zugeordneten Schlüsselspeicher ablegt, wobei der innerhalb des intermediären Netzwerkknotens (1) jeweils zur bitweisen XOR-Verknüpfung einer Bitsequenz mit dem über den intermediären Netzwerkknoten (1) übertragenen Nutzschlüssel verwendete PQC-Schlüssel mittels eines Schlüsselmanagements unter Angabe eines den PQC-Schlüssel eindeutig bezeichnenden Identifikators ausgewählt wird.

5. Verfahren nacheinem der Ansprüche 1 bis 4, **dadurch gekennzeichnet, dass** die eingangsseitige Einheit (2) und die ausgangsseitige Einheit (3) des intermediären Netzwerkknotens (1) sich vor der Aushandlung eines oder mehrerer PQC-Schlüssel gegenseitig unter Anwendung eins PQC-Signierverfahrens authentifizieren.

6. Netzwerkknoten, nämlich intermediärer Netzwerkknoten (1), welcher Teil eines Übertragungspfades zur Übertragung eines quantensicheren Nutzschlüssels über einen klassischen Kanal ist, wobei der intermediäre Netzwercknoten (1) sowohl mit einem auf diesem Übertragungspfad vorhergehenden als auch mit einem auf dem Übertragungspfad nachfolgenden Netzwerkknoten in einer QKD-Beziehung steht und ausgestattet ist mit
- Mitteln (6; 6'), ausgebildet zur quantentechnischen Erzeugung und für das Management kryptographischer Schlüssel und zum Aufbau je eines Quantenkanals, das heißt je eines Kanals zur Übertragung von Quantenzuständen für die Schlüsselverteilung nach dem QKD-Prinzip, mit dem auf dem Übertragungspfad vorgehenden Netzwerkknoten und mit dem nachfolgenden Netzwerkknoten, sowie zur Bereitstellung je eines, bei der Nutzung des QKD-Prinzips, zu dem jeweiligen Quantenkanal gehörenden Protokoll-Links und
- Mitteln (7; 7') zur lokalen Speicherung von Schlüsseln und zu deren Verwaltung und
- Mitteln zum Aufbau je einer Verbindung zu dem vorhergehenden Netzwerkknoten und zu dem nachfolgenden Netzwerkknoten als Teil des einen klassischen Kanal zur Übertragung des Nutzschlüssels verwendenden Übertragungspfades,
**dadurch gekennzeichnet, dass** unter Nutzung des klassischen Kanals zur Übertragung des quantensicheren Nutzschlüssels zu dem vorhergehenden und zu dem nachfolgenden Netzwerkknoten als Teil des Übertragungspfades aufgebaute Verbindungen (4, 5) in dem intermediären Netzwerkknoten (1) eingangsseitig und ausgangsseitig durch Einheiten (2, 3) terminiert werden, welche dazu ausgebildet sind,
- untereinander PQC-Schlüssel, nämlich Schlüssel nach einem PQC-Verfahren, das heißt nach einem Verfahren der Post Quantum Cryptography, auszuhandeln und
- Bitsequenzen miteinander durch bitweise Anwendung der XOR-Operation miteinander zu verknüpfen und
- einen über den Übertragungspfad mittels des intermediären Netzwercknotens (1) übertragenen Nutzschlüssel untereinander als eine, durch bitweise XOR-Verknüpfung dieses Nutzschlüssels mit einem zwischen der eingangsseitigen Einheit (2) und der ausgangsseitigen Einheit (3) ausgehandelten PQC-Schlüssel gebildete Bitsequenz zu übertragen, so dass der betreffende Nutzschlüssel in dem intermediären Netzwerkknoten (1) außerhalb der Einheiten (2, 3) ausschließlich in Form der durch bitweise XOR-Verknüpfung mit dem PQC-Schlüssel gebildeten Bitsequenz vorliegt.

7. Netzwerkkonten nach Anspruch 6, **dadurch gekennzeichnet, dass** die die zu dem vorhergehenden und dem nachfolgenden Netzwerkknoten aufgebauten, den klassischen Kanal nutzenden Verbindungen (4, 5) terminierenden Einheiten (2, 3) als hardwaretechnisch gehärtete Einheiten ausgebildet sind.

8. Netzwerkknoten nach Anspruch 7, **dadurch gekennzeichnet, dass** eine jeweilige Einheit (2, 3) mit einer der Speicherung mit der jeweils anderen Einheit (2, 3) ausgehandelter PQC-Schlüssel dienenden Speichereinheit gemeinsam in einem Hardware-Sicherheitsmodul HSM angeordnet ist.

## Claims

1. Method for transmitting a quantum-secure key between two network nodes which are equipped with means for generating quantum-secure keys but are not connected directly to each other via a quantum channel, in which method the quantum-secure key, which is later used as useful key for securely transmitting data between the two network nodes, is generated in one of the two network nodes and is transmitted to the other network node via a transmission path having at least one intermediate network node (1), **characterized in that** the useful key is transmitted within the intermediate network node (1) from an input-side unit (2), which receives the useful key having a bit sequence arriving from a preceding network node on the transmission path, to an output-side unit (3), which transmits the useful key having a bit sequence intended for a following network node on the transmission path, in the form of a bit sequence formed by bitwise XOR operation of the useful key using a PQC key mediated between the input-side unit (2) and the output-side unit (3) according to a PQC method, that is to say a method of Post Quantum Cryptography, wherein the useful key is present in the intermediate network node (1) outside of the input-side and the output-side unit (2, 3) only in the form of the bit sequence formed by bitwise XOR operation using the PQC key.

2. Method according to Claim 1, wherein the intermediate network node (1) is in a QKD relationship both with the preceding network node on the transmission path and with the following network node on the transmission path and wherein the intermediate network node (1) receives the useful key that is to be transmitted, with regard to the transmission direction of the useful key on the transmission path, on the input side with a bit sequence which is formed from the preceding network node by bitwise XOR operation of the useful key using a common quantum key that is present both at the intermediate network node (1) and at the network node preceding it and wherein the intermediate network node (1) transmits the useful key on the output side to the network node following it with a bit sequence which is formed from the intermediate network node (1) by bitwise XOR operation of the useful key with a common quantum key that is present both at the intermediate network node (1) and at the network node following it, **characterized in that** the bit sequence arriving at the intermediate network node (1) at the input side undergoes a bitwise XOR operation from its input-side unit (2) both with the common quantum key that is used during the generation of this bit sequence and that is present in the intermediate network node (1) and in the preceding network node and with the PQC key mediated with the output-side unit (3) and is then transmitted to the output-side unit (3) of the intermediate network node (1) and **in that** the bit sequence, received by the output-side unit (3) from the input-side unit (2), undergoes a bitwise XOR operation in the output-side unit (3) of the intermediate network node (1) both with the PQC key mediated with the input-side unit (2) and with a common quantum key that is present in the intermediate network node (1) and in the network node following it.

3. Method according to Claim 1 or 2, **characterized in that** the PQC key is mediated between the input-side unit (2) and the output-side unit (3) using an encapsulation algorithm.

4. Method according to one of Claims 1 to 3, **characterized in that** the input-side unit (2) and the output-side unit (3) of the intermediate network node (1) mediate a plurality of PQC keys which each of the units (2, 3) stores in a key store assigned to it, wherein the PQC key used within the intermediate network node (1) in each case for the bitwise XOR operation of a bit sequence using the useful key transmitted via the intermediate network node (1) is selected by means of a key management system specifying an identifier uniquely identifying the PQC key.

5. Method according to one of Claims 1 to 4, **characterized in that** the input-side unit (2) and the output-side unit (3) of the intermediate network node (1) mutually authenticate themselves using a PQC signing method prior to the mediation of one or more PQC keys.

6. Network node, namely intermediate network node (1), which is part of a transmission path for transmitting a quantum-secure useful key via a conventional channel, wherein the intermediate network node (1) is in a QKD relationship both with a preceding network node on this transmission path and with a following network node on the transmission path and is equipped with
- means (6; 6'), designed for the quantum-technical generation and for the management of cryptographic keys and for establishing in each case a quantum channel, that is to say in each case a channel for transmitting quantum states for the key distribution according to the QKD principle, having the preceding network node on the transmission path and having the following network node, and for providing in each case, using the QKD principle, a protocol link belonging to the respective quantum channel, and
- means (7; 7') for locally storing keys and for managing said keys and
- means for establishing in each case a connection to the preceding network node and to the following network node as part of the transmission path using a conventional channel for transmitting the useful key,
**characterized in that**, using the conventional channel for transmitting the quantum-secure useful key to the preceding and to the following network node as part of the transmission path, established connections (4, 5) in the intermediate network node (1) are terminated on the input side and on the output side by units (2, 3) which are designed
- to mediate PQC keys amongst each other, namely keys according to a PQC method, that is to say a method of Post Quantum Cryptography, and
- to link bit sequences to each other by bitwise application of the XOR operation and
- to transmit a useful key transmitted via the transmission path by means of the intermediate network node (1) amongst each other as a bit sequence formed by bitwise XOR operation of this useful key using a PQC key mediated between the input-side unit (2) and the output-side unit (3), as a result of which the useful key in question is present in the intermediate network node (1) outside of the units (2, 3) exclusively in the form of the bit sequence formed by bitwise XOR operation using the PQC key.

7. Network node according to Claim 6, **characterized in that** the units (2, 3) terminating the connections (4, 5) established to the preceding and to the following network node and using the conventional channel are designed as hardware-hardened units.

8. Network node according to Claim 7, **characterized in that** a respective unit (2, 3) having a storage unit used for storing PQC keys mediated with the respective other unit (2, 3) is mutually arranged in a hardware security module HSM.

## Revendications

1. Procédé permettant de transmettre une clé à sécurité quantique entre deux noeuds de réseau équipés de moyens de génération de clés à sécurité quantique mais qui ne sont par reliés directement l'un à l'autre par un canal quantique, dans lequel la clé à sécurité quantique devant ultérieurement servir de clé utile pour la transmission de données sécurisée entre les deux noeuds de réseau est générée dans l'un des deux noeuds de réseau et est transmise à l'autre noeud de réseau par un chemin de transmission comprenant au moins un noeud de réseau intermédiaire (1),
**caractérisé en ce qu'**à l'intérieur du noeud de réseau intermédiaire (1), la clé utile est transmise d'une unité côté entrée (2), qui reçoit la clé utile avec une séquence de bits arrivant du noeud de réseau précédent sur le chemin de transmission, à une unité côté sortie (3), qui émet la clé utile avec une séquence de bits destinée à un noeud de réseau suivant sur le chemin de transmission, sous la forme d'une séquence de bits formée par combinaison XOR bit à bit de la clé utile avec une clé PQC négociée entre l'unité côté entrée (2) et l'unité côté sortie (3) selon un procédé PQC, c'est-à-dire un procédé de cryptographie post-quantique, dans lequel la clé utile est présente sur le noeud de réseau intermédiaire (1) en dehors de l'unité côté entrée et de l'unité côté sortie (2, 3) uniquement sous la forme de la séquence de bits formée par combinaison XOR bit à bit avec la clé PQC.

2. Procédé selon la revendication 1, dans lequel le noeud de réseau intermédiaire (1) est en relation QKD à la fois avec le noeud de réseau précédent sur le chemin de transmission et avec le noeud de réseau suivant sur le chemin de transmission, et dans lequel le noeud de réseau intermédiaire (1) reçoit la clé utile à transmettre, par rapport à la direction de transmission de la clé utile sur le chemin de transmission, côté entrée avec une séquence de bits qui est formée par le noeud de réseau précédent par combinaison XOR bit à bit de la clé utile avec une clé quantique commune, présente à la fois sur le noeud de réseau intermédiaire (1) et le noeud de réseau qui le précède, et dans lequel le noeud de réseau intermédiaire (1) émet la clé utile côté sortie au noeud de réseau qui le suit avec une séquence de bits qui est formée par le noeud de réseau intermédiaire (1) par combinaison XOR bit à bit de la clé utile avec une clé quantique commune, présente à la fois sur le noeud de réseau intermédiaire (1) et le noeud de réseau qui le suit,
**caractérisé en ce que** la séquence de bits arrivant en entrée au noeud de réseau intermédiaire (1) est combinée XOR bit à bit par son unité côté entrée (2) à la fois avec la clé quantique utilisée pour la génération de cette séquence de bits et présente sur le noeud de réseau intermédiaire (1) et sur le noeud de réseau précédent, et avec la clé PQC négociée avec l'unité côté sortie (3), et est ensuite transmise à l'unité côté sortie (3) du noeud de réseau intermédiaire (1), et **en ce que** la séquence de bits, reçue par l'unité côté sortie (3) de la part de l'unité côté entrée (2), est combinée XOR bit à bit dans l'unité côté sortie (3) du noeud de réseau intermédiaire (1) à la fois avec la clé PQC négociée avec l'unité côté entrée (2) et avec une clé quantique commune, présente sur le noeud de réseau intermédiaire (1) et sur le noeud de réseau qui le suit.

3. Procédé selon la revendication 1 ou 2, **caractérisé en ce que** la clé PQC est négociée entre l'unité côté entrée (2) et l'unité côté sortie (3) en utilisant un algorithme d'encapsulation.

4. Procédé selon l'une quelconque des revendications 1 à 3, **caractérisé en ce que** l'unité côté entrée (2) et l'unité côté sortie (3) du noeud de réseau intermédiaire (1) négocient une pluralité de clés PQC que chacune des unités (2, 3) stocke dans une mémoire de clés qui lui est associée, dans lequel la clé PQC utilisée à l'intérieur du noeud de réseau intermédiaire (1) respectivement pour la combinaison XOR bit à bit d'une séquence de bits avec la clé utile transmise par le noeud de réseau intermédiaire (1) est sélectionnée au moyen d'une gestion de clés indiquant un identifiant désignant la clé PQC de manière univoque.

5. Procédé selon l'une quelconque des revendications 1 à 4, **caractérisé en ce que** l'unité côté entrée (2) et l'unité côté sortie (3) du noeud de réseau intermédiaire (1) s'authentifient mutuellement avant la négociation d'une ou de plusieurs clés PQC en appliquant un procédé de signature PQC.

6. Noeud de réseau, notamment noeud de réseau intermédiaire (1), qui fait partie d'un chemin de transmission servant à transmettre une clé utile à sécurité quantique par un canal classique, dans lequel le noeud de réseau intermédiaire (1) est en relation QKD à la fois avec un noeud de réseau précédent sur ce chemin de transmission et avec un noeud de réseau suivant sur le chemin de transmission, et est équipé de
- moyens (6 ; 6') réalisés pour la génération par technique quantique et pour la gestion de clés cryptographiques et pour l'établissement d'un canal quantique respectivement, c'est-à-dire d'un canal respectivement pour la transmission d'états quantiques pour la distribution de clés selon le principe QKD, avec le noeud de réseau précédent et le noeud de réseau suivant sur le chemin de transmission, ainsi que pour la fourniture respectivement d'un lien de protocole appartenant au canal quantique respectif lors de l'utilisation du principe QKD, et
- moyens (7 ; 7') pour le stockage local de clés et pour leur gestion, et
- moyens pour établir respectivement une liaison avec le noeud de réseau précédent et avec le noeud de réseau suivant comme une partie du chemin de transmission utilisant un canal classique pour la transmission de la clé utile,
**caractérisé en ce que** des liaisons (4, 5) établies en utilisant le canal classique pour la transmission de la clé utile à sécurité quantique avec le noeud de réseau précédent et avec le noeud de réseau suivant faisant partie du chemin de transmission sont terminées dans le noeud de réseau intermédiaire (1) côté entrée et côté sortie par des unités (2, 3) qui sont réalisées à cet effet,
- pour négocier entre elles des clés PQC, notamment des clés selon un procédé PQC, c'est-à-dire selon un procédé de cryptographie post-quantique, et
- pour combiner des séquences de bits entre elles par une application bit à bit de l'opération XOR, et
- pour transmettre une clé utile transmise par le chemin de transmission au moyen du noeud de réseau intermédiaire (1) entre elles comme une séquence de bits formée par combinaison XOR bit à bit de cette clé utile avec une clé PQC négociée entre l'unité côté entrée (2) et l'unité côté sortie (3), de sorte que la clé utile concernée est présente sur le noeud de réseau intermédiaire (1) en dehors des unités (2, 3) exclusivement sous la forme de la séquence de bits formée par combinaison XOR bit à bit avec la clé PQC.

7. Noeud de réseau selon la revendication 6, **caractérisé en ce que** les unités (2, 3) terminant les liaisons (4, 5) établies avec le noeud de réseau précédent et le noeud de réseau suivant en utilisant le canal classique sont réalisées comme des unités physiquement renforcées.

8. Noeud de réseau selon la revendication 7, **caractérisé en ce qu'**une unité respective (2, 3) pourvue d'une unité de stockage servant à stocker les clés PQC négociées avec l'autre unité (2, 3) respectivement sont disposées ensemble dans un module matériel de sécurité HSM.
